# EUROPÄISCHE PATENTSCHRIFT

(11) **EP 1 147 986 B1**
(45) Veröffentlichungstag und Bekanntmachung des Hinweises auf die Patenterteilung: **17.11.2004**
(21) Anmeldenummer: 01109253.3
(22) Anmeldetag: 14.04.2001
(51) Int. Cl.: B64C 9/24, B64C 21/04, B64C 23/00, B64D 15/04, B64C 3/46

(54) **Drucksteuerung für einen Verdrängungskörper**
Pressure supply and control for a positive displacement device
Commande de la pression pour un dispositif à déplacement positif

(30) Priorität: 17.04.2000 DE 10019187
(43) Veröffentlichungstag der Anmeldung: 24.10.2001
(73) Patentinhaber: Airbus Deutschland GmbH, 21129 Hamburg (DE)
(72) Erfinder: Gleine, Wolfgang, Dr.-Ing., 21255 Kakenstorf (DE); Mau, Knut, Dipl.-Ing., 22339 Hamburg (DE); Carl, Udo, Prof. Dr.-Ing., 21077 Hamburg (DE)
(74) Vertreter: Hansmann, Dierk, Dipl.-Ing.

(56) Entgegenhaltungen:
- EP-A- 1 057 723
- US-A- 3 128 966
- US-A- 6 015 115
- DOBRZYNSKI W ET AL: "AIRFRAME NOISE STUDIES ON WINGS WITH DEPLOYED HIGH-LIFT DEVICES" AIAA AEROACOUSTICS CONFERENCE, XX, XX, 2. Juni 1998 (1998-06-02), Seiten 1-17, XP001084583

## Beschreibung

Die Ertindung bezieht sich auf eine Drucksteuerung für einen verdrangungskorper nacn dem Oberbegriff des Anspruchs 1. Mit ihr wird das kontrollierte Aufblasen von mindestens einem Verdrängungskörper, der Mitbestandteil einer Anordnung zur aeroakustischen Lärmminderung von Vorflügeln eines Verkehrsflugzeuges ist, welcher am rückwärtigen Profilbereich des Vorflügels befestigt ist, umgesetzt.

Aeroakustisch bedingter Lärm bei Verkehrsflugzeugen, der (allgemein) durch die Umströmung der Flugzeugstruktur entsteht, wird ein zunehmend wichtiger Anteil des verursachten Gesamt-Fluglärms. Bei modernen Verkehrsflugzeugen entsteht dieser Fluglärm beispielsweise beim Landeanflug zu (grob eingeschätzt) etwa 50 % durch die Umströmung der Flugzeugstruktur, während die andere Hälfte des Lärmanteils durch die Triebwerke verursacht wird. Technische Fortschritte durch den Einsatz von vergleichsweise leiseren Triebwerken werden sich für den Gesamtlärmeindruck eines landenden Verkehrsflugzeuges nur dann voll auswirken, wenn gleiche Fortschritte zur Minderung des Umströmungslärms der Flugzeugzelle erzielt werden. Eine Verschärfung der Lärmgrenzwerte - insbesondere bei Flughäfen mit hohem Verkehrsaufkommen - zeichnet sich bereits weltweit ab.

Daß die Fachwelt sich ernsthaft mit vorzusehenden Verbesserungen der Lärmminderung einer umströmten Flugzeugstruktur, insbesondere an der Tragwerkstruktur im Vorflügelbereich, befasst, darüber gibt eine vom "American Institute of Aeronautics and Astronautics" publizierte Studie der Herren Dobrzynski und Gehlhar eine entsprechende Auskunft (Werner Dobrzynski, Burkhard Gehlhar: "Airframe Nolse Studies on Wings with Deployed High-Lift Devices"; Deutsches Zentrum für Luft und Raumfahrt e. V. (DLR), Institut für Entwurfsaerodynamik, Abteilung Technische Akustik, Forschungszentrum Braunschweig, Germany; 4th AIAA/CEAS Aeroacoustics Conference; June 2-4, 1998 / Toulouse, France]. In dieser Studie wird unter anderem auf eine Lösung eingegangen, nach der am Innenbereich (am rückwärtigen Profilbereich) eines Vorflügels, der sich in Richtung des Hauptflügels aufspannt, ausgangs der Profilwölbung ein vorflügelbefestigtes Leitblech (gelenkbeweglich) angeordnet ist, das (sinnvollerweise) an den Vorflügel angelenkt und eingeschwenkt wird. Durch diese Maßnahme verspricht man sich, den Geräuschpegel während des Starts und der Landung eines Flugzeuges zu verringem. Für den Reiseflug des Flugzeuges wird dann das Leitblech an den Vorflügel angelenkt. Es mag sein, dass man entsprechende Geräuschminderungen im Windkanal erfolgreich nachweisen kann, allerdings wird diese Lösung nach praktischen Erwägungen wohl kaum verwendet werden, weil sie so nicht umsetzbar ist. Im eingefahrenen Zustand des Vorflügels (Reisekonfiguration) mit entsprechend dem rückwärtigen Profilbereich (nach innen) geklapptem Leitblech ist kein ausreichender Platzvomanden, um eine starre Konfiguration zu verstauen. Andererseits weist eine derartige flexible Trennfläche, die sich beim Einfahren der Innenkontur des Vorflügels anpasst, dann nicht genügend Festigkeit auf, um den durch die Luftströmung verursachten Kräften standzuhalten:

Von daher wird Flattemeigung mit dem Effekt einer Geräuschabstrahlung auftreten, die dem beadsichtigten Zweck entgegensteht. Ein angelenkles Blech wird zusätzliche mechanische bewegliche Teile erfordern, wodurch neben dem Anwachsen der Herstellungs- und Wartungskosten außerdem Gewichtserhöhungen auftreten werden. Der Übergang von der Vorflügelunterseite zu dem Gelenk der Trennfläche muss frei von Kontursprüngen und Schlitzen ausgebildet sein, wodurch sehr hohe Fertigungsgenauigkeiten erforderlich sind. Femer wird die vorgeschlagene Blech-Trennfläche erheblichen Wechselkräflen, die von der Luftströmung initiiert werden, ausgesetzt sein. Da diese Trennfläche lediglich an der Unterkante des Vorflügels über das Gelenk befestigt wird und keine weiteren Versteifungen vorgesehen werden, besteht die Gefahr, dass diese Trennfläche zu Schwingungen angeregt wird. Da die Kontur der Slatrückseite wie auch die Geometrie des Luftspaltes sich über die Spannweite der Tragfläche ändert, müssten die Elemente dieser Trennfläche eine Verwindung / Schrägung bekommen, wodurch der Einklappmechanismus zusätzlich verkompliziert wird. Sehr kritisch wird die Situation eines Fehlerfalles, beispielsweise bei Blockade der Mechanik, bewertet, weil sich dann der Vorflügel nicht mehr einfahren lässt. Well auch keine weiteren Hinweise oder Anregungen zum Abstellen dieser Nachteile (auch nicht andeutungsweise) vermittelt werden oder auf etwa weitere Verbesserungen (wenigstens andeutungsweise) hingewiesen wird, nach denen eine Geräuschminderung am Vorflügel durch anderweitige strömungsbegünstigende Maßnahmen, die gänzlich auf zusätzliche sich bewegende mechanische Elemente verzichten würden und außerdem eine optimale Anpassung an verschiedene Flugzustände umsetzen würden, erreicht wird, kann man bestenfalls die vorgeschlagene Lösung als Anregung zum Auffinden von verbesserten Lösungen auffassen, nach denen der Anteil des Vorflügellärms am Gesamtlärm von umströmten Flugzeugstrukturen der Verkehrsflugzeuge signifikant reduziert und eine technisch und wirtschaftlich befriedigende Gesamtlösung umgesetzt wird.

Diese bekannten Lösungen offenbaren der Fachwelt keine Lösung (auch nicht Dobrzynski und Gehlhar), wonach der Fachmann aufgrund seines Wissens in die Lage versetzt sein würde, eine Drucksteuerung zum kontrollierten Beblasen von einem am rückwärtigen Profilbereich des Vorflügels befestigten Verdrängungskörper, der zur Lärmminderung des Vorflügels durch Reduzierung oder Vermeidung von Wirbelbildung(en) an der umströmten aerodynamischen Vorflügel-Struktur während des Startes oder der Landung eines Verkehrsflugzeuges benutzt wird, bereitzustellen.

Demzufolge liegt der Erfindung die Aufgabe zugrunde, eine Drucksteuerung für einen aufblasbaren, elastischen Verdrängungskörper, der am rückwärtigen Profilbereich des Vorflügels befestigt ist, anzugeben, mit der ein kontrolliertes Einregeln von einem definierten Aufblasedruck im Verdrängungskörper, das unabhängig vom Druck im Zapfluftsystem eines Verkehrsflugzeuges ist, bei minimal eingesetztem Leistungs-bedarf umgesetzt wird. Außerdem soll eine einfache Installation der (als Nachrüstlösung vorzusehenden) Drucksteuerung und deren einfache Wartbarkeit angestrebt werden.

Diese Aufgabe wird durch die im Anspruch 1 angegebenen Maßnahmen gelöst. In den weiteren Ansprüchen sind zweckmäßige Ausgestaltungen dieser Maßnahmen angegeben.

Die Erfindung ist in einem Ausführungsbeispiel anhand der beigefügten Zeichnungen näher beschrieben. Es zeigen
- Fig. 1: die Drucksteuerung für einen hohlen Verdrängungskörper (Single Chamber System):
- Fig. 2: die Drucksteuerung für einen hohlen Verdrängungskörper (Multiple Chamber System):
- Fig. 3: eine schematische Darstellung für mehrere am linken Fügel eines Verkehrs-Flugzeuges angeordnete Vorflügel unterschledlicher Vorflügel-Kontur und dort befestigter Verdrängungskörper unterschiedlichen Typs mit veränderter Hohlbalg-Form im Verlauf der Vorflügelspannweite und die Druckversorgungs-Leitungsführung;
- Fig. 4: den Aufbau einer Vorflügel-Konturen-Regeleinrichtung (Slat Contour Controller) mit Anschlussangaben.

Um das Verständnis für die Situation der Lärmentstehung an der umströmten Tragwerkstruktur eines Verkehrsflugzeuges zu fördern, wird zunächst auf eine der Fachwelt bekannte (nicht gezeigte) Konfiguration eingegangen. Diese besteht aus einer Tragwerkstruktur mit einem Hauptflügel, einem Vorflügel 1 und einer Landeklappe, wobei der Vorflügel und die Landeklappe während des Starts und der Landung des Verkehrsflugzeuges aus dem Hauptflügel ausgefahren werden. Bedingt durch die (bisher übliche) Bauform des Vorflügels, und nur darauf wird eingegangen, entsteht innerhalb dem rückwärtigen Profilbereich des Vorflügels 1 im Bereich der Profilwölbung 3, die in Vorflügel-Spannweitenrichtung die Form einer Hohlkehle besitzt, an der gewölbten Profiloberfläche ein parallel angeordneter Wirbel, dessen fluktuierendes Druckfeld (ohne einen in diesem Bereich befestigten Verdrängungskörper 4) offensichtlich die ungewünschte Lärmentstehung verursacht. Messungen im aeroakustischen Windkanal bestätigen, dass bei einer starren Verkleidung des vom Wirbel eingenommenen Raumes der vom Vorflügel ausgehende Lärm mit dem installierten Verdrängungskörper 4, der in keiner Flugsituation gefährdende Auswirkungen auf den Flug eines Verkehrsflugzeuges ausüben wird, deutlich reduziert wird. Durch diese vorzusehende lärmmindemder Maßnahme am Vorflügel 1, wird erreicht, dass die aerodynamischen Eigenschaften, die auf den Auftrieb des Verkehrsflugzeuges und den aerodynamischen Widerstand bezogen werden, sich nicht ungünstig verändem, sondern im Gegenteil eher verbessert werden.

Da der erwähnte Verdrängungskörper 4, den man mit einem Hohlbalg aus elastischen Material am rückwärtigen Profilbereich des Vorflügels 1 an der gewölbten Profiloberfläche innerhalb der Profilwölbung 3 durch Kleben rückseitig befestigt, nur im aufgeblasenen Zustand zur Verbesserung der aeroakustischen Situation beitragen wird, ohne die aerodynamischen Verhältnisse im Vorflügelbereich einzuschränken, - eher zu verbessern -, wird klar, dass nur ein kontrolliertes Aufblasen des Verdrängungskörpers 4 mit flugzeugintem bereitgestellter Druckluft wegen der Abstimmung der Balggeometrie (bzw. der gewünschten Konturengenauigkeit des Balgs im aufgeblasenen Zustand), die in einer Korrelation mit dem Hohlraum-Innendruck und dessen Begrenzung (wegen des verwendeten Balgmaterials) steht, der-angestrebten Situation gerecht wird.

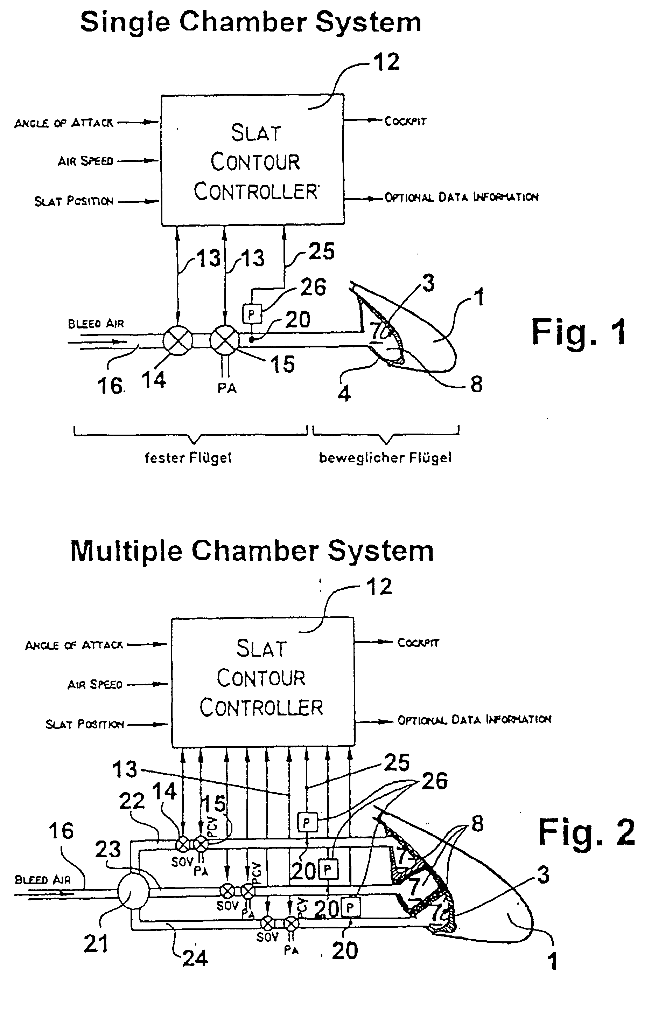

Aus den Figuren 1 und 2 kann man nun den Aufbau einer derartigen Drucksteuerung für einen hohlen Verdrängungskörper 4, genauer: für eine Hohlbalg-Ausführung mit einem .Single Chamber Systems' (nach der Fig. 1) und ebenfalls für eine Hohlbalg-Ausführung mit einem .Multiple Chamber Systems' (nach der Fig. 2), ersehen, die durch den Detail-Aufbau einer Vorflügel-Konturen-Regeleinrichtung (Slat Contour Controller) mit Anschlussangaben zu den übrigen Elementen der Drucksteuerung ergänzt wird.

Nach der Fig. 1 besteht diese Drucksteuerung für einen hohlen Verdrängungskörper 4 (bzw. einen Hohlbalg), dessen Hohlraum 7 eine einzelne Kammer 8 darstellt, aus einer Vorflügel-Konturen-Regeleinrichtung 12, die über Datenleitungen 13 mit einer elektronischen Abschaltventil-Regeleinheit (bspw. einem Direktregler) eines Abschaltventils 14 und einer elektronischen Druckregelventil-Regeleinheit eines Druckregelventils 15 informationstechnisch (also elektrisch leitend) verbunden ist. Das Abschaltventil 14 und das Druckregelventil 15 können allgemein eine flugzeuginterne Druckluft-Sammelleitung, welche (allgemein) die benötigte Druckluft zum Aufblasen des Verdrängungskörpers 4 bereitstellt, angeschlossen sein. Beispielgemäß wird diese Druckluft von einer Anzapfstelle eines Bleed-Air-Systems als Bleed Air bereitgestellt, demnach einer Bleed-Air-Leitung 16, die diesem Bleed-Air-System des Verkehrsflugzeuges angeschlossen ist, das Abschaltventil 14 und darauffolgend das Druckregelventil 15 in der genannten Reihenfolge (also: in Reihe) geschalten ist. Der dem Druckregelventil 15 folgende Bleed-Air-Leitungsabschnitt ist mit dem Hohlraum 7 des Verdrängungskörpers 4 verbunden. Dabei soll das Abschaltventil 14 die Luftzufuhr der durch die Bleed-Air-Leitung 16 zuströmenden Druckluft (Bleed Air) regeln, die auf eine dem Verdrängungskörper (4) definierte Luftmenge (zum Erreichen der gewünschten Körperkontur) geregelt wird. Das Druckregelventil 15 wird den aktuellen Luftdruck der Druckluft überwachen, damit der Verdrängungskörper 4 (der Hohlbalg) - trotz seiner Standhaftigkeit nicht (ungewollt) über einen Höchstdruck belastet wird, infolge dessen er - wegen möglicherweise (aufgetretener) Systemfehler im Bleed-Air-System oder sonstiger Umstände - versagen (zerplatzen) könnte. Das Druckregelventil 15 wird deshalb auch als Überdruckventil eingesetzt, welches eben bei extremen Drücken im Bleed-Air-System vor genannten Beschädigungen schützt. Sobald die Bleed-Air-Strömung das Druckregelventil 15 mit einem vordeflnierten (ventileingestellten) Überdruck erreicht, wird der überschüssige Druckluftanteil über einen Ventilabgang (PA) entweichen.

Es ist denkbar, dass in der Bleed-Air-Leitung 16 über die Leitungslänge verteilt mehrere Sensoren angeordnet sind. Diesen im Querschnitt der Bleed-Air-Leitung 16 angeordneten Sensoren, die (sinnvollerweise) an sensiblen Stellen innerhalb einem definierten Bleed-Air-Leitungsquerschnitt, der beispielgemäß dem Druckregelventil 15 folgt, (in der Hauptsache mit einem Drucksensor) den aktuellen Luftdruck und (daneben möglicherweise mit einem Temperatur-Sensor) die aktuelle Lufttemperatur der Bleed-Air-Strömung erfassen; sind entsprechende Sensor-Datenleitungen 25 angeschlossen, die mit der Vorflügel-Konturen-Regeleinrichlung 12, im besonderen: mit einer der Vorflügel-Konturen-Regeleinrichtung 12 integrierten Vergleichseinheit 19, verbunden sind. Auf diese Vergleichseinheit 19 wird später näher eingegangen.

Über diese Sensoren werden die vom einzelnen Sensor abgegebenen (elektronisch datengewandeiten) Zustands-Informationen der Vergleichseinheit 19 bereitgestellt.

Innerhalb dem mit dem Verdrängungskörper 4 verbundenen Bleed-Air-Leitungsabschnitt ist (wie angedeutet) wenigstens ein Druck-Sensor 20, der dem Druckregelventil 15 nachgeordnet ist, angeordnet, sofern auf die Installation des Temperatur-Sensors verzichtet wird. Von letzterem wird dann der sensitiv erfasste Ist-Luftdruck auf dem Bleed-Air-Leitungsabschnitt der Vergleichseinheit 19 zugeleitet, der vom Drucksensor 20 in ein (dem erfassten Druckwert entsprechendes) elektronisches Signal gewandelt und über die Sensor-Datenleitung 25 der Vorflügel-Konturen-Regeleinrichtung 12 respektive der Vergleichseinrichtung 19 als elektronisches Rückführungssignal zugeleitet wird.

Der Sensor-Datenleitung 25 ist außerdem ein elektronisches Druckmessgerät 26 angeschlossen, um den sensitiv erfassten Ist-Luftdruck auch visuell zu überwachen. Dabei wird die Sensor-Datenleitung 25 durch das Druckmessgerät 26 geschleift und von dort aus zur Vorflügel-Konturen-Regeleinrichtung 12 geschaltet. Weil zwischen der Vergleichseinheit 19 und einem Flug-Daten-Schreiber und / oder einer Display-Anzeige (im Cockpit des Verkehrsflugzeuges) eine zusätzliche Datenleitung geschaltet ist, besteht femer die Möglichkeit, dass man auf der Display-Anzeige neben der Darstellung von weiteren Zustandsinformationen, die sich auf der Vorflügel-Konturen-Regeleinrichtung 12 (genauer: auf einer - später erläuterten - Zustandserfassungeinheit 17 ) zugeleitete Fluginformationen beziehen, auch den erfassten Ist-Luftdruck auf dem (definierten) Bleed-Air-Leitungsabschnitt visuell überwachen kann, der (für den betreffenden Augenblick aus Gründen) zumindestens vom Flug-Daten-Schreiber (als "Optional Data Information") gespeichert wird.

Einen ähnlichen Aufbau wird man der Fig. 2 für einen aufbalsbaren Verdrängungskörper 4 mit mehreren Kammern 8 entnehmen. Die Unterschiede im Vergleich des Aufbaus nach der Fig. 1 werden nachfolgend herausgearbeitet. Danach ist der Bleed-Air-Leitung 16, welche mit (irgend) einer Anzapfstelle im Bleed-Air-System verbunden ist, ein Leitungsverzweiger 21 angeschlossen. Diesem Leltungsverzweiger 21 sind mehrere Bleed-Air-Abgangsleitungen 22, 23, 24 angeschlossen, die den Kammern 8 des Verdrängungskörpers 4 verbunden sind. Dabei ist der einzelnen abgezweigten Bleed-Air-Abgangsleitung 22, 23, 24) jeweils ein Abschaltventil 14 und ein Druckregelventil 15 (nach der hinsichtlich Fig. 1 beschriebenen Art) geschalten. Die betreffende elektronische Abschaltventil-Regeleinheit des Abschaltventils 14 (SOV = Shut Off Valve) und die elektronische Druckregelventil-Regeleinheit des Druckregelventils 15 (PCV = Pressure Control Valve - with Relief Function), welche die gewünschte Ventilstellung einregulieren, sind jeweils über Datenleitungen 13 mit der Vorflügel-Konturen-Regeleinrichtung 12 [genauer: mit einem (später erläuterten) Rechenwerk 18] verbunden. Diese Regeleinheiten übermitteln dem Rechenwerk 18 entsprechende elektronische Informationen hinsichtlich der aktuellen Ventilstellung der Ventile oder des aktuellen Drucks in den Leitungen zu den Kammern 8 und empfangen vom Rechenwerk 18 elektronische Ventil-Stell-Befehle, die daraufhin die entsprechende Regulierung der Ventilstellung veranlassen.

Der Informationsaustausch zwischen den (beispielgemäß) einer ersten, zweiten und dritten Bleed-Air-Abgangsleitung 22, 23, 24 seriell geschaltenen Ventilen 14, 15 (SOV, PCV) - geschicht nach dem Vorbild der (hinsichtlich der Fig. 1) erwähnten Art. Auch der Datenaustausch zwischen den (dem einzelnen) Ventil(en) und der Vorflügel -Konturen-Einrichtung 12 wird - nach dem geschilderten Vorbild der (hinsichtlich der Fig. 1) erwähnten Weise stattfinden, nur - auf diese Anwendung (nach Fig. 2) bezogen - auf mehrere Ventile abgestimmt, die den Aufblasvorgang des (beispielgemäß) mit drei Kammern 8 versehenen hohlen Verdrängungskörpers 4, der als Hohlbalg ausgeführt ist, beispielsweise hinsichtlich dem gewünschten Kammerinnendruck, dem Aufblasvolumen der einzelnen Kammer 8 in Korrelation der gewünschten Außenkontur des Balgs, beeinflussen. Auch die sensitive Erfassung und die Übermittlung der aktuellen Luftdruck-Daten auf dem betreffenden - dem Druckregelventil 15 nachgeordneten - Bleed-Air-Leitungsabschnitt der ersten, zweiten und dritten Bleed-Air-Abgangsleitung 22, 23, 24, an die Vorflügel-Konturen-Regeleinrichtung 12 (Vergleichseinheit 19) sowie deren visuelle Wiedergabe (auf einem respektive drei einzelnen Druckmessgeräten 26 und auf einer Display-Anzeige im Cockpit oder deren Speicherung von einem Flug-Dalen-Schreiber) wird nach dem Vorbild der Fig. 1 geschehen. Gleiches wird - nach dem Vorbild der Fig. 1 - hinsichtlich der Bereitstellung von datenübersetzten Flugzuslandsinformationen, die der Vorflügel-Konturen-Regeleinrichtung 12 (der Zustandserfassungseinheit 17) übermittelt werden, geschehen.

Zurückkommend auf den Verdrängungskörper 4 wird ergänzt, dass letzterer mit drei Kammern 8 (allgemein: mit wenigstens einer Kammer 8) bei einem durch zwei (allgemein: mehrere) Trennwände abgegrenzten Hohlraum 7 (pro Kammer 8) versehen ist. Über die betreffende Bleed-Air-Abgangsleitung 22, 23, 24, die der einzelnen Kammer 8 angeschlossen ist, werden die Kammern 8 mit aus dem Bleed-Air-System zugeführter Druckluft (Bleed Air) versorgt. Dabei wird der nichtgeklebte Außenbereich des im Bereich der Profilwölbung 3 ganzflächig dem rückwärtigen Profilbereich des Vorflügels 1 geklebten Verdrängungskörpers 4 (Hohlbalgs), der aus den dehnbaren Teilwandbereichen der nebeneinander angeordneten Kammern 8 zusammengesetzt ist, infolge des durch die Luftzufuhr wachsenden oder durch die Luftabfuhr sinkenden Luftdrucks In der Kammer 8 (unter Einflussnahme der Vorflügel-Konturen-Regeleinrichtung 12 auf die Ventilstellungen der Ventilreihenschaltung) kontrolliert gedehnt oder geschrumpft.

Allgemein - auf beide Ausführungsformen nach den Figuren 1 und 2 bezogen - wird fortgeführt, dass, sofern das betreffende Abschaltventil 14 geöffnet ist, in dieser Ventilstellung die betreffende Druckluftleitung, die sich auf die Bleed-Air-Leitung 16 (nach der Fig. 1) oder die einzelne Bleed-Air-Abgangsleitung 22, 23, 24 (nach der Fig. 2) bezieht, unter Druck gesetzt wird. Dabei regelt das Druckregelventil 15, das diesem Abschaltventil 14 In Luftstromrichtung nachgeordnet ist, unabhängig vom Luftdruck im Bleed-Air-System einen definierten Aufblasedruck im (nach der Fig. 1 - Hohlraum 7 des) Verdrängungskörper 4 (im Blasebalg) bzw. (nach der Fig. 2) in den Kammern 8 des Verdrängungskörpers 4 ein.

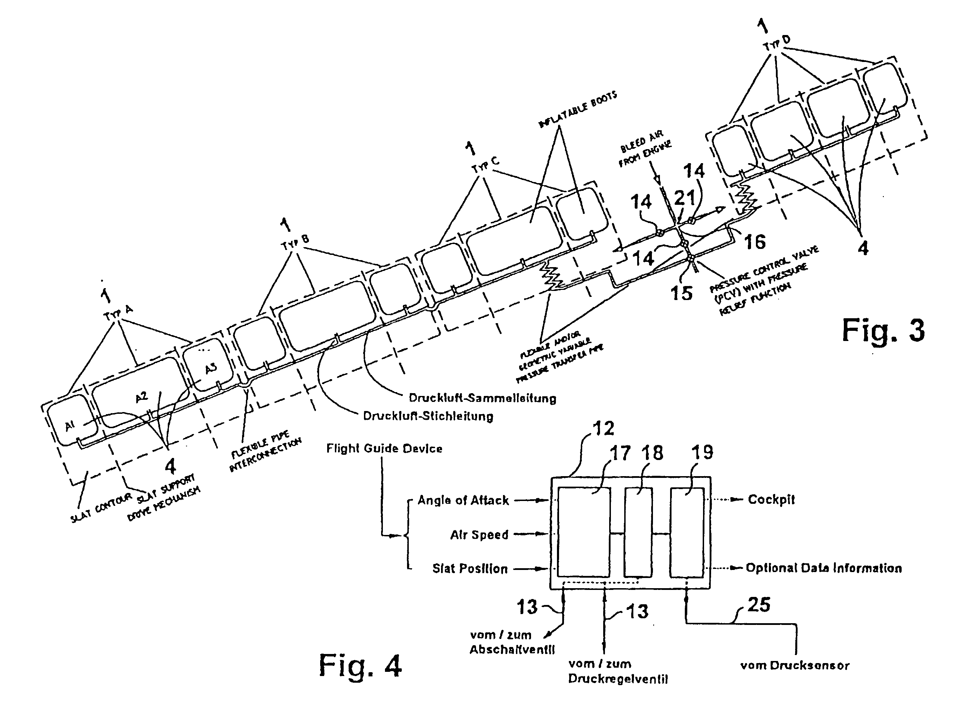

An dieser Stelle wird nun näher auf die - in der Fig. 4 dargestellte - (und mehrfach erwähnte) Vorflügel-Konturen-Regeleinrichtung 12 (Slat Countor Controllor), die den Kern der Drucksteuerung für den Verdrängungskörper 4 - nach den Figuren 1 und 2 und die praxisnahe Umsetzung nach der Fig. 3 - ausmacht, eingegangen.

Diese Vorflügel-Konturen-Regeleinrichtung 12 besteht (allgemein) aus drei elektronischen Komponenten der Dateninformationsverarbeitung, wobei von ihr (mit Hilfe der Komponenten) die Erfassung, Aufbereitung und Umsetzung von empfangenen elektronischen Dateninformationen und deren Transferierung an ihr angeschlossene Informationseinheit(en), von denen die Regeleinheiten der Ventile hervorgehoben werden, beispielgemäß umgesetzt wird.

Die Vorflügel-Konturen-Regeleinrichtung 12 ist (im besonderen sogenanntermaßen) mit einer Zustandserfassungseinheit 17, einem Rechenwerk 18 und einer Vergleichseinheit 19 ausgerüstet. Dabei sind die Zustandserfassungseinheit 17 und die Vergleichseinheit 19 intern (der Regeleinrichtung 12 betrachtet) mit dem Rechenwerk 18 verbunden. Dem Rechenwerk 18 sind (die erwähnten) Datenleitungen 13 angeschlossen, die eben mit den genannten elektronischen Ventil-Regeleinheiten (nach den Figuren 1 und 2), also der betreffenden Abschaltventil-Regeleinheit des Abschaltventils 14 und der betreffenden Druckregelventil-Regeleinheit des Druckregelventils 15, leitend (informationstechnisch) verbunden ist. Von dem Rechenwerk 18 werden (über diesen Leitungsweg) entsprechend transferierte Dateninformationen über die aktuellen Ventilstellungen aufgenommen, gleichfalls werden dem Rechenwerk 18 von der Zustandserfassungseinheit 17und von der Vergleichseinheit 19 permanent Dateninformationen transferiert. Dabei wird erwähnt, dass die Zustandserfassungseinheit 17 über wenigstens eine (nicht gezeigte) Datenleitung mit einer flugzeugintern angeordneten (Flugdatenerfassungseinheit, die einer) Flugführungseinrichtung [Flight Guide Device] (integriert ist,) verbunden ist, von der aus ihr datenübersetzte Flugzustandsinformationen, die sich wenigstens auf den Anstellwinkel (angle speed attack), die Fluggeschwindigkeit (air speed) und die Vorflügelstellung (slat position) beziehen, übermittelt werden. Die Vergleichseinheit 19, die eigentlich auch eine Art Zustandserfassungseinheit darstellt, aber aus Gründen der Unterscheidung, welche sich an eine - nachher erläuterte - weitere Fähigkeit dieser Einheit anlehnt, sogenannt wird, transferiert u. a. dem Rechenwerk 18 permanent die sensitiv erfassten und elektronisch gewandelten Dateninformationen, die sich auf den Ist-Luftdruck der Bleed-Air-Strömung durch den dem betreffenden Druckregelventil 15 (PCV) nachgeordneten definierten Bleed-Air-Leitungsabschnitt beziehen. Im Rechenwerk 18 werden alle zugeführten Dateninformationen erfasst, aufbereitet und danach (nach einem bestimmten Rechenalgorithmus) miteinander verglichen. Das Vergleichsergebnis wird vom Rechenwerk 18 in entsprechende Stell-Befehle (Stellinformationen) für die einzelnen Ventile auf der (den) Bleed-Air-Leitung(en) 16 resp. Bleed-Air-Abgangsleitung 22, 23, 24 gewandelt und danach den Regeleinheiten derbetreffenden Ventile zur situationsabhängigen (kontrollierten) Veränderung der Ventilstellung(en) des (der Drucksteuerung integrierten) einzelnen Abschaltventils (14) und / oder des einzelnen Druckregelventlls (15) (nach den Figuren 1 und 2) transferiert, damit der entsprechende Verdrängungskörper 4 in der gewünschten (situationsangepassten Art und Weise) kontrolliert mit Druckluft (Bleed Air) versorgt respektive aufgeblasen wird.

Weil (möglicherweise gewünscht) vorgesehen wird, dass zusätzlich der bezogenen Flugzustandsinformationen auch das (Informationstechnisch aufbereitete) Vergleichsergebnis vom Rechenwerk 18 der Vergleichseinrichtung 19 übermittelt wird, die diese Daleninformationen dann gemeinsam mit den (von ihr) bezogenen Ist-Luftdruck-Dateninformation(en) der erwähnten Display-Anzeige oder dem Flug-Daten-Schreiber (vollständig oder nur teilweise), wird sogenanntermaßen die Bezeichnung "Vergleichseinheit" gewählt.

In der Fig. 3 wird abschließend eine schematische Darstellung - mit entsprechenden Verständnisfördernden Bemerkungen - für mehrere am linken Flügel (und andeutungsweise am rechten Flügel) eines Verkehrs-Flugzeuges angeordnete Vorflügel unterschiedlicher Vorflügel-Kontur [Slat-Contour] (vom Typ A, B, C, D) und dort dem einzelnen Vorflügel 1 befestigte Verdrängungskörper 4 unterschiedlichen Typs mit veränderter Hohlbalg-Form (vom Typ A1, A2, A3) im Verlauf der Vorflügelspannweite wiedergegeben. Dabei bezieht sich die Darstellung nach der Fig. 3 auf ein sogenanntes "System für Verdrängungskörper 4" (Balgsystem), bei dem der einzelne Verdrängungskörper 4 einen als Druckkammer genutzten Hohlraum 7aufweist.

Es wird soweit darauf eingegangen, dass der einzelnen Bleed-Air-Sammelleitung, die - wie erwähnt - einer Anzapfstelle im Bleed-Air-System des Verkehrsflugzeuges angeschlossen ist, auf jeder Flügelseite mehrere (zusätzlich benötigte) Leitungsverzweiger 21 installiert sind, die auf jedem Vorflügel 1 (Slat) sitzen, denen jeweils Bleed-Air-Stichleitungen angeschlossen sind. Dabei ist die einzelne Stichleitung dem betreffenden Verdrängungskörper 4 - vom Typ A1, A2, A3 -, verbunden, wobei Jeweils drei Verdrängungskörper 4 (Hohlbalge) dem rückwärtigen Profilbereich des einzelnen Vorflügels 1 geklebt sind. Sofern Verdrängungskörper 4 eingesetzt werden, die mehrere Kammern 8 aufweisen, spricht man von einem (sogenannten) Mehrfachkammer-System. Bei einem derartigen System führen die Bleed-Air-Stichleitungen zu allen Kammern 8 des einzelnen Verdrängungskörpers 4 - vom Typ A1, A2, A3 - und des gleichen Vorflügels 1, dabei die Verdrängungskörper 4 - wie gehabt - dem rückwärtigen Profilbereich des einzelnen Vorflügels 1 geklebt sind.

Außerdem kann es auch sein, um einen Bezug zu den Ausführungen nach den Figuren 1 und 2 zu finden, dass der einzelnen Bleed-Air-Leitung 16 mehrere Bleed-Air-Abgangsleitungen 22, 23, 24, denen jeweils ein Abschaltventil 14 und ein Druckregelventil 15, deren zugeordnete Regeleinheit über die betreffende Datenleitung 13 dem Rechenwerk 18 angeschlossen ist, In Reihe geschalten ist, über einen Leitungsverzweiger-Anschluß geschalten sind, die mit dem betreffenden Hohlraum 7 (der Verdrängungskörper 4 - ausgeführt für ein .Single Chamber System") oder der einzelnen Kammer 8 (des betreffenden Verdrängungskörpers 4 - ausgeführt für ein Multiple Chamber System") verbunden sind.

Jedenfalls sind zwischen den beweglichen Vorflügein (unterschiedlicher Vorflügel-Kontur) die Ventilleitungen durch flexible, ausgleichsfähige Luft-Verbindungsleitungen (,Flexible Pipe Interconnection" or further "Flexible and/or Geometric Variable Pressure Transfer Pipe') überbrückt.

Dabei sind diese verschiedenen und unterschiedlich dimensionierten Verdrängungskörper 4 in Spannweitenrichtung des (allgemein: betreffenden) Flügels des Verkehrsflugzeuges segmentweise angeordnet, deren Segmentierung sich an der geometrisch-konstruktiven Anordnung der Vorflügel-Stütz- und Antriebsstationen ("Slat Support Drive Mechanism") orientiert.

Allgemein wäre (auf alle Ausführungen nach den Figuren 1 bis 3 bezogen) noch denkbar, dass - zusätzlich der Bleed-Air-Leitung 16 und / oder der einzelnen Bleed-Air-Abgangsleitung 22, 23, 24 - ebenfalls in der einzelnen Bleed-Air-Sammelleitung und / oder der einzelnen Bleed-Air-Stichleitung jeweils ein Drucksensor 20, der über eine Sensor-Datenleitung 25 der Vergleichseinheit 19 verbunden ist, (zu dem erwähnten Zweck) positioniert ist, dabei die Sensor-Datenleitung 25 durch ein Druckmessgerät 26 geschleift ist. Dadurch wird die zuverlässige und vermehrte Gewinnung von den jeweiligen Verdrängungskörper 4 (Hohlbalg) betreffenden Druckinformationen, deren Bereitstellung an die Vorflügel-Konturen-Regeleinrichtung 12 erfolgen wird, welche infolge vorhandener Überhöhung von aktuellen Luftdruckwerten in der betreffenden Druckluftleitung (Bleed-Air-Leitung) für ihn (über)lebensnotwendig sein könnlen, gefördert.

Es lässt sich allgemeinverständlich folgendes zusammenfassen. Das Aufblasen des betreffenden Verdrängungskörpers 4 (Hohlbalgs) erfolgt nach den Figuren 1 und 2 mit Druckluft aus dem Bleed-Air-System. Über ein Abschaltventil 14 (SOV) kann die Druckluftleitung für den Verdrängungskörper 4 unter Druck gesetzt werden. Ein danach angeordnetes Druckregelventil 15 (PCV) gestattet es, unabhängig vom Druck im Zapfluftsystem einen definierten Aufblasedruck im Verdrängungskörper4 einzuregeln. Gleichfalls hat dieses Druckregelventil 15 (PCV) eine Überdruckventilfunktion, die den Verdrängungskörper 4 bei Systemfehlem oder extremen Drücken im Bleed-Air-System vor mechanischem Versagen (Bersten) schützt. Die Regelung des gewünschten Drucks im Verdrängungskörper 4 erfolgt durch einen sogenannten "Slat Contour Controller" 12 nach Fig. 4, der als Rückführungssignal den Ist-Druck von einem Sensor zugeführt bekommt und das Druckregelventil 15 (PCV) ansteuert. Dieser Controller aktiviert bzw. passiviert auch das System durch ein Schaltsignal auf das Abschaltventil 14 (SOV). Eingangsgrößen des Controllers sind die Vorflügelstellung bzw. Kommandosignale, die Fluggeschwindigkeit und der Anstellwinkel, um das System betriebsgerecht, abhängig von diesen Flugzeug-Strömungsparametem zu kontrollieren. Durch den Controller ist auch die Testfähigkeit des mechanischen Leitungs- und Balgsystems hinsichtlich Dichtigkeit gegeben. Falls das Abschaltventil 14 (SOV) geöffnet ist, der Balg druckbeaufschlagt ist und sodann das Abschaltventil 14 (SOV) wieder geschlossen wird, muß bei Dichtheit der Innendruck im Balgsystem konstant bleiben. Ein Druckabfall deutet eine Undichtigkeit an, die als Anzeige und /oder Information an das Wartungssystem gegeben wird

Die Gesamtanordnung dieses aufblasbaren Formkörpersystems wird in Fig. 3 gezeigt. Nach einer Anzaptstelle im Bleed-Air-System sind vorzugsweise zellenfest das Abschaltventll 14 (SOV) and das Druckregelventil 15 (PCV) installiert, hinter dem sich zwei Druckleitungen zum linken oder rechten Flügel verzweigen. Über eine flexible, in der Geometrie variable Leitung wird die druckgeregelte Luft zum Aufblasen der Formkörper auf den innersten Außen-Vorflügel und einen ggf. vorhandenen Innen-Vorflügel geleitet. Von dieser Sammelleitung (pro Flügelhälfte) führen Stichleitungen zu den einzelnen aufblasbaren Balgelementen. Zwischen den beweglichen Vorflügeln sind die Ventilleitungen ebenfalls durch flexible, ausgleichsfähige Verbindungsleitungen überbrückt.
Die Segmentierung der aufblasbaren Formstücke orientiert sich an der geometrisch-konstruktiven Anordnung der Vorflügel-Stütz- und Antriebsstationen. Aufgrund der Flügelzuspitzung ergeben sich absolut unterschiedlich gewünschte Abmessungen der Formkörper-Geometrie im aufgeblasenen Zustand. Da ein konisches Halbzeugprofil zu aufwendig wäre, wird pro Vorflügel (d. h. alle Segmente A1 bis A3 ect.) eine Halbzeug-Geometrie Typ A oder B, C oder D verwandt, die den bestmöglichen Kompromiß zwischen Aufwand und erreichter Qualität der strömungsmechanisch beeinflussten Kanalgeometrien darstellt.

Der Leistungsbedarf für das vorgestellte System ist sehr gering, da im aufgeblasenen Zustand der Verdrängungskörper 4 (Formkörper) kein Massenstrom an Zapfluft benötigt wird, um den Druck aufrecht zu erhalten, außer eventuell geringen Luftmengen, die das Druckregelventil 15 (PCV) zur Regelung benötigt und als Leckage nach außen freigibt.

### Bezugszeichen

- 1: Vorflügel
- 3: Profilwölbung (des Vorflügels 1)
- 4: Verdrängungskörper, Hohlbalg
- 5: Hohlraum (des Vorflügels 1)
- 6: Luftöffnung (des Vorflügels 1)
- 7: Hohlraum (des Verdrängungskörpers 4)
- 8: Kammer (des Verdrängungskörpers 4)
- 12: Vorflügel-Konturen-Regeleinrichtung
- 13: Datenleitung
- 14: Abschaltventil (SOV)
- 15: Druckregelventil (PCV)
- 16: Bleed-Air-Leitung
- 17: Zustandserfassungseinheit
- 18: Rechenwerk
- 19: Vergleichseinheit
- 20: Drucksensor
- 21: Leitungsverzweiger
- 22: Bleed-Air-Abgangsleitung
- 23: Bleed-Air-Abgangsleitung
- 24: Bleed-Air-Abgangsleitung
- 25: Sensor-Datenleitung
- 26: Druckmessgerät

## Patentansprüche

1. Drucksteuerung für einen Verdrängungskörper (4), der Mitbestandteil einer Anordnung zur aeroakustischen Lärmminderung eines Vorflügels (1) von Verkehrsflugzeugen ist, der an einen Hauptflügel angelenkt oder aus diesem ausgefahren wird, dessen rückwärtiger Profilbereich eine der Außenkontur des Hauplflügels angepasste Profilwölbung (3) aufweist,
**dadurch gekennzeichnet, dass** eine Vorflügel-Konturen-Regeleinrichtung (12) über Datenleitungen (13) mit einer Abschaltventil-Regeleinheit (einem Direktregler) eines Abschaltventils (14) und einer Druckregelventil-Regeleinheit eines Druckregelventils (15) informationstechnisch verbunden ist, dabei das Abschaltventil (14) und das Druckregelventil (15) einer Bleed-Air-Leitung (16), die einem Bleed-Air-System des Verkehrsflugzeuges angeschlossen ist, in Reihe geschaltet sind, dabei das Abschaltventil (14) die Luftzufuhr der durch die Bleed-Air-Leitung (16) strömenden Druckluft (Bleed Air) auf eine durch den Verdrängungskörper (4) definierte Luftmenge regelt und das dem Abschaltventil (14) nachgeschaltete Druckregelventil (15) den Luftdruck der Druckluft überwacht, außerdem die Bleed-Air-Leitung (16) einem aufblasbaren Hohlraum (7) des elastisch dehnbaren Verdrängungskörpers (4), der innerhalb der Profilwölbung (3) des rückwärtigen Profilbereichs des Vorflügels (1) befestigt ist, angeschlossen ist.

2. Drucksteuerung nach Anspruch 1, **dadurch gekennzeichnet, dass** die Vorflügel-Konturen-Regeteinrichtung (12) mit einer Zustandserfassungseinheit (17), einem Rechenwerk (18) und einer Vergleichseinheit (19) ausgerüstet ist, dabei die Zustandserfassungseinheit (17) und die Verglelchseinheit (19) intern mit dem Rechenwerk (18) verbunden sind, wobei von dem Rechenwerk (18) über die ihm angeschlossenen und mit der Abschaltventil-Regeleinheit und der Druckregelventil-Regeleinheit verbundenen Datenleitungen (13) entsprechende Informationen über die aktuellen Ventilstellungen aufgenommen und im Vergleich mit von der Zustandserfassungseinheit (17) und der Vergleichseinheit (19) permanent bezogenen Daten verarbeitet werden sowie nach geschehener Informationsverarbeitung entsprechende Stell-Informationen zur (kontrollierten) Veränderung der Ventilstellung des Abschaltventils (14) und / oder des Druckregelventils (15) abgegeben werden.

3. Drucksteuerung nach Anspruch 2, **dadurch gekennzeichnet, dass** die Zustandserfassungseinheit (17) über wenigstens eine Datenleitung mit einer flugzeugintem angeordneten (Flugdatenerfassungseinheit, die einer) Flugführungseinrichtung (Flight Guide Device] (integriert ist,) verbunden ist, von der aus ihr datenübersetzte Flugzustandsinformationen, die sich wenigstens auf den Anstellwinkel (angle speed attack), die Fluggeschwindigkeit (air speed) und die Vorflügelstellung (slat position) beziehen, übermittelt werden.

4. Drucksteuerung nach den Ansprüchen 1 und 2, **dadurch gekennzeichnet, dass** in der Bleed-Air-Leitung (16) über die Leitungslänge verteilt mehrere Sensoren angeordnet sind, die an sensiblen Stellen innerhalb einem definierten Bleed-Air-Leitungsquerschnitt den aktuellen Luftdruck und / oder die aktuelle Lufttemperatur der Bleed-Air-Strömung erfassen, dabei den einzelnen Druckund / oder Temperatur-Sensoren entsprechende Sensor-Datenleitungen (25) angeschlossen sind, die mit der Vergleichseinheit (19) verbunden sind, über die die vom einzelnen Sensor abgegebenen (datengewandelten) Zustands-Informationen der Vergleichseinheit (19) bereitgestellt werden.

5. Drucksteuerung nach Anspruch 4, **dadurch gekennzeichnet, dass** innerhalb dem mit dem Verdrängungskörper (4) verbundenen Bleed-Air-Leitungsabschnitt wenigstens ein Druck-Sensor (20), der dem Druckregelventil (15) nachgeordnet ist, angeordnet ist, von dem aus der sensitiv erfasste Ist-Luftdruck auf dem Bleed-Air-Leitungsabschnitt der Vergleichseinheit (19) als Rückführungssignal zugeleitet wird.

6. Orucksteuerung nach Anspruch 4, **dadurch gekennzeichnet, dass** Innerhalb dem mit dem Verdrängungskörper (4) verbundenen Bleed-Air-Leitungsabschnitt wenigstens ein Temperatur-Sensor, der dem Druckregelventil (15) nachgeordnet ist, angeordnet Ist, von dem aus die sensitiv erfasste Ist-Lufttemperatur auf dem Bleed-Air-Leitungsabschnitt der Vergleichseinheit (19) als Rückführungssignal zugeleitet wird:

7. Drucksteuerung nach Anspruch 2, **dadurch gekennzeichnet, dass** das Druckregelventil (15) die Sonderfunktionen eines Überdruckventils umsetzt, mit dem der Verdrängungskörper (4) bei extremen Drücken im Bleed-Air-System, die infolge von Systemfehlern vorhanden sind, vor mechanischem Beschädigungen bis zum Versagen (Bersten) geschützt wird.

8. Drucksteuerung nach den Ansprüchen 1 und 2, **dadurch gekennzeichnet, dass** einem der Bleed-Air-Leitung (16) angeschlossenen Leitungsverzweiger (21), der mit einer Anzapfstelle im Bleed-Air-System verbunden ist, mehrere Bleed-Air-Abgangsleitungen (22, 23, 24) angeschlossen sind, dabei der einzelnen abgezweigten Bleed-Air-Abgangsleitung (22, 23, 24) jeweils das Abschalt-ventil (14) und das Druckregelventil (15) geschalten sind, deren Regeleinheiten jeweils mit dem Rechenwerk (18) über Datenleitungen (13) verbunden sind.

9. Drucksteuerung nach den Ansprüchen 1 und 8, **dadurch gekennzeichnet, dass** die einzelne. Bleed-Air-Abgangsleitung (22, 23, 24) mit wenigstens einer Kammer (8) bei einem durch mehrere Trennwände abgegrenzten Hohlraum(7) eines Verdrängungskörpers (4), der so in mehrere Kammern (8) aufgeteilt ist, verbunden ist, wobei über die betreffende Bleed-Air-Abgangsleilung (22, 23, 24) die einzelne Kammer (8) mit aus dem Bleed-Air-System zugeführter Druckluft (Bleed Air) versorgt wird, dabei der nichtgeklebte Außenbereich des im Bereich der Profilwölbung (3) ganzflächig dem rückwärtigen Profilbereich des Vorflügels (1) geklebten Verdrängungskörpers (4), der aus den dehnbaren Teilwandbereichen der nebeneinander angeordneten Kammern (8) zusammengesetzt ist, infolge des durch die Luftzufuhr wachsenden oder durch die Luftabfuhr sinkenden Luftvolumens in der Kammer (8) kontrolliert gedehnt oder geschrumpft wird.

10. Drucksteuerung nach den Ansprüchen 1 und 8, **dadurch gekennzeichnet, dass** das Abschaltventil (14) geöffnet ist, wobei in dieser Ventilstellung die betreffende Druckluftleitung, die sich auf die Bleed-Air-Leitung (16) oder die einzelne Bleed-Air-Abgangsleitung (22, 23, 24) bezieht, unter Druck gesetzt wird.

11. Drucksteuerung nach den Ansprüchen 1 und 8, **dadurch gekennzeichnet, dass** das Druckregelventil (15) dem Abschaltventil (14) in Luftstromrichtung nachgeordnet ist, wobei letzteres es gestattet, unabhängig vom Luftdruck im Bleed-Air-System einen definierten Aufblasedruck im Verdrängungskörper (4) einzuregeln.

12. Drucksteuerung nach den Ansprüchen 1 und 8, **dadurch gekennzeichnet, dass** zur Überwachung der Dichtigkeit des betreffenden Verdrängungskörpers (4) nach dem Erreichen einer auf einen definierten Luftdruck eingeregelten Druckbeaufschlagung des Verdrängungskörpers (4) das Abschaltventil (14) in eine geschlossene Ventilstellung geregelt ist.

13. Drucksteuerung nach den Ansprüchen 1, 8 und 9, **dadurch gekennzeichnet, dass** wenigstens zwei von der Vorflügel-Konturen-Regeleinrichtung (12) ventilgeregelte Bleed-Air-Leitungen (16) einem Verdrängungskörper (4) angeschlossen sind, wobei jeweils eine Bleed-Air-Leitung (16) einer als Balg-Teil-Kammer bezeichneten Kammer (8) des Verdrängungskörpers (4) verbunden ist.

14. Drucksteuerung nach den Ansprüchen 1 und 13, **dadurch gekennzeichnet, dass** der einzelnen Bleed-Air-Leitung (16) auf jeder (mit mehreren Vorflügeln versehenen) Flügelseite mehrere Bleed-Air-Stichleitungen angeschlossen sind, die zum Hohlraum (7) oder zu allen Kammern (8) des betreffenden Verdrängungskörper (4) auf jeden Vorflügel (1) geführt sind.

15. Drucksteuerung nach den Ansprüchen 1, 8, 9 und 14, **dadurch gekennzeichnet, dass** der einzelnen Bleed-Air-Stichleitung mehrere Bleed-Air-Abgangsleitungen (22, 23, 24), denen jeweils ein Abschaltventil (14) und ein Druckregelventil (15), deren zugeordnete Regeleinheit über die betreffende Datenleitung (13) dem Rechenwerk (18) angeschlossen ist, in Reihe geschalten ist, über einen Leitungsverzweiger-Anschluß geschalten sind, die dem Hohlraum (7) oder der einzelnen Kammer (8) des betreffenden Verdrängungskörpers verbunden sind.

16. Drucksteuerung nach den Ansprüchen 1 und 13 bis 15, **dadurch gekennzeichnet, dass** zwischen den beweglichen Vorflügeln die Ventilleitungen durch flexible, ausgleichsfähige Luft-Verbindungsleitungen überbrückt sind.

17. Drucksteuerung nach Anspruch 13, **dadurch gekennzeichnet, dass** die verschiedenen unterschiedlich dimenslonierten Verdrängungskörper (4) in Spannweitenrichtung des betreffenden Vorflügels (1) segmentweise angeordnet sind, deren Segmentierung sich an der geometrisch-konstruktiven Anordnung der Vorflügel-Stütz- und Antriebsstationen orientiert.

18. Drucksteuerung nach den Ansprüchen 1, 4, 5, 8, 13 und 14, **dadurch gekennzeichnet, dass** zusätzlich der Bleed-Air-Leitung (16) und / oder der einzelnen Bleed-Air-Abgangsleitung (22, 23, 24) ebenfalls in der einzelnen Bleed-Air-Sammelleitung und / oder der einzelnen Bleed-Air-Stichleitung jeweils ein Drucksensor (20), der über eine Sensor-Datenleitung (25) der Vergleichseinheit (19) verbunden ist, angeschlossen ist, dabei die Sensor-Datenleitung (25) durch ein Druckmessgerät (26) geschleift ist.

19. Drucksteuerung nach den Ansprüchen 1, 4 und 18, **dadurch gekennzeichnet, dass** zwischen der Vergleichseinheit (19) und einem Flug-Daten-Schreiber und / oder einer Display-Anzeige eine zusätzliche Datenleitung geschalten ist, dabei von der Display-Anzeige die entsprechenden Zustandsinformationen visuell dargestellt werden, die zumindestens vom Flug-Daten-Schreiber gespeichert werden.

20. Drucksteuerung nach den Ansprüchen 1, 2, 5, 8 und 12, **dadurch gekennzeichnet, dass** die Vorflügel-Konturen-Regeleinrichtung (12) zusätzlich mit einer elektronischen Auswerteeinheit ausgestattet ist, von der, sofern das Abschaltventil (12) geschlossen ist, mittels des Drucksensors (20) die Dichtigkeit des betreffenden Verdrängungskörpers (4) überwacht und im Fehlerfall auf der Display-Anzeige im Cockpit oder von einem Wartungssystem zur Anzeige gebracht wird.

21. Drucksteuerung nach Anspruch 20, **dadurch gekennzeichnet, dass** von der Auswerteeinheit, sofern der Verdrängungskörper (4) mit einem definierten Luftdruck beaufschlagt ist und das Abschaltventil (14) geschlossen ist, die Dichtigkeit des Verdrängungskörpers (4), bei der der definitiv beaufschlagte Körperinnendruck konstant bleibt, oder die Undichtigkeit, bei der ein Druckabfall des Körperinnendrucks besteht, welchen die Auswerteeinheit durch einen Vergleich des definitiv beaufschlagten mit dem abgefallenen Körperinnendruck ermittelt, überwacht wird, die bei festgestellten Abweichungen das Vergleichsergebnis in ein entsprechendes Signal umsetzt, das von ihr der Display-Anzeige im Cockpit oder dem Wartungssystem zur Anzeige zuleitet wird.

## Claims

1. Pressure controller for a displacer (4), which is part of an arrangement for aero-acoustic noise reduction of a commercial aircraft slat (1), which is linked to or extended out of a main wing, and the rear profile area of which has a profile convexity (3) which is adapted to the external contour of the main wing, **characterized in that** a slat contour controller (12) is connected information-technologically via data lines (13) to a cutoff valve control unit (direct controller) of a cutoff valve (14) and a pressure control valve control unit of a pressure control valve (15), the cutoff valve (14) and pressure control valve (15) being connected in series to a bleed air line (16), which is connected to a bleed air system of the commercial aircraft, the cutoff valve (14) controlling the air feed of the compressed air (bleed air) which flows through the bleed air line (16) to an air quantity which is defined by the displacer (4), and the pressure control valve (15) which is connected downstream from the cutoff valve (14) monitoring the air pressure of the compressed air, and additionally the bleed air line (16) being connected to an inflatable hollow space (7) of the elastically extensible displacer (4), which is fixed within the profile convexity (3) of the rear profile area of the slat (1).

2. Pressure controller according to Claim 1, **characterized in that** the slat contour controller (12) is equipped with a state capture unit (17), an arithmetic unit (18) and a comparison unit (19), the state capture unit (17) and comparison unit (19) being connected internally to the arithmetic unit (18), which receives appropriate information about the current valve settings via the data lines (13) which are connected to it and to the cutoff valve control unit and pressure control valve control unit, and processes the information in comparison with the data which is constantly acquired by the state capture unit (17) and comparison unit (19), and, after the information processing has occurred, outputs appropriate setting information for (controlled) change of the valve setting of the cutoff valve (14) and/or pressure control valve (15).

3. Pressure controller according to Claim 2, **characterized in that** the state capture unit (17) is connected via at least one data line to a flight guide device which is arranged internally to the aircraft (or: to a flight data capture unit which is arranged internally to the aircraft, and is integrated with a flight guide device), by which flight guide device flight state information which has been data-translated out of it, and refers to at least the angle of attack (angle speed attack), air speed and slat position, is transmitted.

4. Pressure controller according to Claims 1 and 2, **characterized in that** in the bleed air line (16), multiple sensors distributed over the line length are arranged, and capture the current air pressure and/or current air temperature of the bleed air flow at sensitive locations within a defined bleed air line cross-section, the individual pressure and/or temperature sensors being connected to appropriate sensor data lines (25), which are connected to the comparison unit (19), via which the (data-converted) state information which is output by the individual sensor is provided to the comparison unit (19).

5. Pressure controller according to Claim 4, **characterized in that** within the bleed air line section which is connected to the displacer (4), at least one pressure sensor (20), which is downstream from the pressure control valve (15), is arranged, and from it the sensitively captured actual air pressure on the bleed air line section is fed to the comparison unit (19) as a feedback signal.

6. Pressure controller according to Claim 4, **characterized in that** within the bleed air line section which is connected to the displacer (4), at least one temperature sensor, which is downstream from the pressure control valve (15), is arranged, and from it the sensitively captured actual air temperature on the bleed air line section is fed to the comparison unit (19) as a feedback signal.

7. Pressure controller according to Claim 2, **characterized in that** the pressure control valve (15) implements the special functions of a pressure relief valve, with which the displacer (4) is protected from mechanical damage leading to failure (bursting) in the case of extreme pressures which are present in the bleed air system because of system faults.

8. Pressure controller according to Claims 1 and 2, **characterized in that** multiple bleed air exit lines (22, 23, 24) are connected to a line brancher (21), which is connected to the bleed air line (16) and to a bleed point in the bleed air system, the cutoff valve (14) and pressure control valve (15), the control units of which are connected to the arithmetic unit (18) via data lines (13), being connected in each case to the individual branched-off bleed air exit line (22, 23, 24).

9. Pressure controller according to Claims 1 and 8, **characterized in that** the individual bleed air exit line (22, 23, 24) is connected to at least one chamber (8) in the case of a hollow space (7), which is delimited by multiple dividing walls, of a displacer (4), which is thus divided into multiple chambers (8), the individual chamber (8) being supplied with compressed air (bleed air) which is fed from the bleed air system via the relevant bleed air exit line (22, 23, 24), the unglued outer area of the displacer (4), which is glued over its whole surface to the rear profile area of the slat (1) in the area of the profile convexity (3), and which is put together out of the extensible part wall areas of the adjacent chambers (8), being extended or shrunk in a controlled manner because of the air volume, which grows because of the air feed or falls because of the air removal, in the chamber (8).

10. Pressure controller according to Claims 1 and 8, **characterized in that** the cutoff valve (14) is opened, the appropriate compressed air line, referring to the bleed air line (16) or the individual bleed air exit line (22, 23, 24), being put under pressure in this valve position.

11. Pressure controller according to Claims 1 and 8, **characterized in that** the pressure control valve (15) is downstream from the cutoff valve (14) in the air flow direction, the latter making it possible, irrespective of the air pressure in the bleed air system, to control the displacer (4) for a defined inflation pressure.

12. Pressure controller according to Claims 1 and 8, **characterized in that** to monitor the leakproofness of the relevant displacer (4) after a displacer (4) pressurisation which is controlled for a defined air pressure is achieved, the cutoff valve (14) is controlled to a closed valve position.

13. Pressure controller according to Claims 1, 8 and 9, **characterized in that** at least two of the bleed air lines (16) which are valve-controlled by the slat contour controller (12) are connected to a displacer (4), a bleed air line (16) being connected in each case to a chamber (8), called the bellows part chamber, of the displacer (4).

14. Pressure controller according to Claims 1 and 13, **characterized in that** multiple bleed air stub lines are connected to the individual bleed air line (16) on each wing side (which is provided with multiple slats), and are fed to the hollow space (7) or to all chambers (8) of the relevant displacer (4) on each slat (1).

15. Pressure controller according to Claims 1, 8, 9 and 14, **characterized in that** multiple bleed air exit lines (22, 23, 24), to each of which a cutoff valve (14) and a pressure control valve (15), the assigned control unit of which is connected to the arithmetic unit (18) via the relevant data line (13), is connected in series, are connected to the individual bleed air stub line via a line brancher connection, which is connected to the hollow space (7) or the individual chamber (8) of the relevant displacer.

16. Pressure controller according to Claims 1 and 13 to 15, **characterized in that** between the movable slats, the valve lines are bridged by flexible air connecting lines which are capable of compensation.

17. Pressure controller according to Claim 13, **characterized in that** the various differently dimensioned displacers (4) are arranged by segments in the wing span direction of the relevant slat (1), the segmentation of which is based on the geometrical-structural arrangement of the slat supporting and driving stations.

18. Pressure controller according to Claims 1, 4, 5, 8, 13 and 14, **characterized in that** additionally a pressure sensor (20), which is connected via a sensor data line (25) to the comparison unit (19), is connected to the bleed air line (16) and/or to the individual bleed air exit line (22, 23, 24), also in the individual bleed air collective line and/or the individual bleed air stub line, the sensor data line (25) being looped through a pressure gauge (26).

19. Pressure controller according to Claims 1, 4 and 18, **characterized in that** between the comparison unit (19) and a flight recorder and/or a display, an additional data line is connected, the appropriate state information being shown visually by the display and at least stored by the flight recorder.

20. Pressure controller according to Claims 1, 2, 5, 8 and 12, **characterized in that** the slat contour controller (12) is additionally equipped with an electronic analysis unit, by which, if the cutoff valve (12) is closed, the leakproofness of the relevant displacer (4) is monitored by means of the pressure sensor (20), and in the case of a fault, it is displayed on the display in the cockpit or by a maintenance system.

21. Pressure controller according to Claim 20, **characterized in that** if a defined air pressure is applied to the displacer (4) and the cutoff valve (14) is closed; the analysis unit monitors the leakproofness of the displacer (4) at which the definitively applied internal body pressure remains constant, or the leakiness at which a pressure drop of the internal body pressure exists, which the analysis unit determines by comparing the definitively applied with the reduced internal body pressure, the analysis unit converting the comparison result into an appropriate signal, which it feeds to the display in the cockpit or to the maintenance system if differences are identified.

## Revendications

1. Commande par pression pour un corps de refoulement (4) faisant partie d'un système de réduction aéro-acoustique du bruit d'un bec de bord d'attaque (1) d'avions de tourisme articulé contre une aile principale ou déployé à partir de cette dernière, et dont le segment profilé arrière présente une courbure profilée (3) adaptée au contour extérieur de l'aile principale, ladite commande étant **caractérisée en ce qu'**un dispositif de réglage des contours du bec de bord d'attaque (12) a été raccordée par des techniques informatiques à une unité de réglage d'une valve marche-arrêt (14) (un régulateur direct) et à une unité de réglage d'une valve de régulation de pression (15), par l'intermédiaire de lignes de données (13), **en ce que** la valve marche-arrêt (14) et la valve de régulation de pression (15) d'une liaison d'air soutiré (16) raccordée à un système d'air soutiré de l'avion de tourisme ont été commutées en série, **en ce que** la valve marche-arrêt (14) règle l'amenée d'air soutiré (Bleed Air) sur une quantité d'air définie par le corps de refoulement (4), **en ce que** la valve de régulation de pression (15) commutée en aval de la valve marche-arrêt contrôle la pression de l'air comprimé, et **en ce que** la liaison d'air soutiré (16) a été raccordée à un espace creux gonflable (7) du corps de refoulement (4) extensible fixé dans la flèche de courbure du profil du segment de profil arrière du bec de bord d'attaque (1).

2. Commande par pression selon la revendication 1, **caractérisée en ce que** le dispositif de réglage des contours du bec de bord d'attaque (12) est équipé d'une unité de saisie de l'état (17), d'une unité de calcul (18) et d'une unité de comparaison (19), l'unité de saisie de l'état (17) et l'unité de comparaison (19) étant reliées en interne à l'unité de calcul (18), l'unité de calcul (18) saisissant des informations adéquates sur les positions effectives des valves, par l'intermédiaire de lignes de données (13) raccordées à l'unité de calcul, à l'unité de réglage de la valve marche-arrêt et à l'unité de réglage de la valve de régulation de pression, lesdites informations étant traitées en comparaison avec des données fournies en permanence par l'unité de saisie de l'état (17) et l'unité de comparaison (19) et les informations de positionnement étant, une fois traitées, émises pour modifier (de façon contrôlée) la position de la valve marche-arrêt (14) et / ou de la valve de régulation de pression (15).

3. Commande par pression selon la revendication 2, **caractérisée en ce que** l'unité de saisie de l'état (17) a été raccordée à un dispositif de guidage de vol disposé à l'intérieur de l'avion (à une unité de saisie de données de vol intégrée à un Flight Guide Device), dispositif à partir duquel des informations sur la situation de vol traduites en données et portant au moins sur l'angle d'incidence (angle speed attack), sur la vitesse de vol (air speed) et la position du bec de bord d'attaque (slat position) sont communiquées.

4. Commande par pression selon les revendications 1 et 2, **caractérisée en ce que** plusieurs capteurs saisissant, en des endroits sensibles situés à l'intérieur d'une section transversale définie de la liaison d'air soutiré, la pression d'air effective et / ou la température effective de l'air de l'écoulement d'air soutiré, ont été répartis sur toute la longueur de la liaison d'air soutiré, des lignes de données (25) correspondant aux différents capteurs de pression et / ou de température, raccordées à l'unité de comparaison (19) et via lesquelles les informations d'état émises (converties en données) par chaque capteur sont mises à la disposition de l'unité de comparaison (19).

5. Commande par pression selon la revendication 4, **caractérisée en ce qu'**au moins un capteur de pression (20) disposé en aval de la valve de régulation de pression (15) et à partir duquel la pression d'air réelle captée sur le segment de la liaison d'air soutiré est acheminée vers l'unité de comparaison (19), sous la forme d'un signal de retour, a été disposé dans le segment de la liaison d'air soutiré raccordé au corps de refoulement (4).

6. Commande par pression selon la revendication 4, **caractérisée en ce qu'**au moins un capteur de température (20) disposé en aval de la valve de régulation de pression (15) et à partir duquel la température réelle de l'air captée sur le segment de la liaison d'air soutiré est acheminée vers l'unité de comparaison (19), sous la forme d'un signal de retour, a été disposé dans le segment de la liaison d'air soutiré raccordé au corps de refoulement (4).

7. Commande par pression selon la revendication 2, **caractérisée en ce que** la valve de régulation de pression (15) convertit les fonctions spéciales d'une soupape de surpression grâce à laquelle le corps de refoulement (4) est, en cas de pressions extrêmes à l'intérieur du système d'air soutiré dues à des erreurs du système, protégé contre les détériorations mécaniques jusqu'à la défaillance (éclatement).

8. Commande par pression selon les revendications 1 et 2, **caractérisée en ce que** plusieurs liaisons de départ d'air soutiré (22, 23, 24) ont été raccordées à un aiguillage de liaisons raccordé à la liaison d'air soutiré (16) et raccordé au système d'air soutiré à l'aide d'un point de soutirage, la valve marche-arrêt (14) et la valve de régulation de pression (15), dont les unités de réglage ont été raccordées à l'unité de calcul (18) par l'intermédiaire de lignes de données, ayant été raccordées aux différentes liaisons de départ d'air soutiré dérivées (22, 23, 24).

9. Commande par pression selon les revendications 1 et 8, **caractérisée en ce que** chaque liaison de départ d'air soutiré (22, 23, 24) a été raccordée à au moins une chambre (8), dans un espace creux (7) d'un corps de refoulement (4) délimité par plusieurs parois de délimitation qui divisent ainsi le corps de refoulement en plusieurs chambres (8), chaque chambre (8) étant alimentée en air comprimé (air soutiré) acheminé à partir du système d'air soutiré et le segment extérieur non collé du corps de refoulement (4) collé sur toute la surface du segment de profil arrière du bec de bord d'attaque (1), dans la zone de la flèche de courbure du profil (3), et constitué des segments de paroi partiels extensibles des chambres juxtaposées (8), étant étendus ou réduits de manière contrôlée à la suite de l'augmentation ou de la diminution du volume d'air à l'intérieur de la chambre (8), augmentation ou diminution induite, respectivement, par l'amenée ou l'évacuation d'air.

10. Commande par pression selon les revendications 1 et 8, **caractérisée en ce que** la valve marche-arrêt (14) est ouverte, la liaison d'air comprimé correspondante portant sur la liaison d'air soutiré (16) ou sur chacune des liaisons de départ d'air soutiré (22, 23, 24) étant ainsi mise sous pression.

11. Commande par pression selon les revendications 1 et 8, **caractérisée en ce que** la valve de régulation de pression (15) a été disposée en aval de la valve marche-arrêt (14) dans la direction d'écoulement de l'air, laquelle valve marche-arrêt permet un réglage défini de la pression de gonflage à l'intérieur du corps de refoulement (4), indépendamment de la pression de l'air dans le système d'air soutiré.

12. Commande par pression selon les revendications 1 et 8, **caractérisée en ce que** la valve marche-arrêt (14) a été réglée en position fermée afin de contrôler l'étanchéité du corps de refoulement (4) correspondant une fois qu'une admission de pression du corps de refoulement (4) réglée sur une pression d'air définie a été atteinte.

13. Commande par pression selon les revendications 1, 8 et 9, **caractérisée en ce qu'**au moins deux liaisons d'air soutiré (16) réglées par les soupapes de l'installation de réglage des contours du bec de bord d'attaque (12) ont été raccordées à un corps de refoulement (4), chaque liaison d'air soutiré (16) étant raccordée à une chambre (8) du corps de refoulement (4) désignée comme chambre à composante de soufflet.

14. Commande par pression selon les revendications 1 et 13, **caractérisée en ce que** plusieurs lignes de branchement d'air soutiré guidées vers l'espace creux (7) ou vers toutes les chambres (8) du corps de refoulement (4) correspondant, sur chaque bec de bord d'attaque (1), ont été raccordées aux différentes liaisons d'air soutiré (16), sur chaque côté de l'aile (équipé de plusieurs becs de bord d'attaque).

15. Commande par pression selon les revendications 1, 8, 9 et 14, **caractérisée en ce que** plusieurs liaisons de départ d'air soutiré (22, 23, 24) raccordées chacune en série à une valve marche-arrêt (14) et à une valve de régulation de pression (15) dont l'unité de réglage a été raccordée à l'unité de calcul (18) par l'intermédiaire de la liaison de données (13) correspondante, et raccordées à l'espace creux (7) ou à chacune des chambres (8) du corps de refoulement correspondant, ont été raccordées à chacune des lignes d'air soutiré en dérivation par l'intermédiaire d'un raccordement - aiguillage de liaisons.

16. Commande par pression selon les revendications 1 et 13 à 15, **caractérisée en ce que**, entre les becs de bord d'attaque mobiles, les liaisons de soupapes sont surmontées par des liaisons de raccordement d'air capables de compenser.

17. Commande par pression selon la revendication 13, **caractérisée en ce que** les différents corps de refoulement (4) dimensionnés différemment ont été disposés par segments dans la direction d'écartement du bec de bord d'attaque (1) correspondant, la segmentation desdits corps étant orientée en fonction de la disposition géométriquement structurale des postes de soutien et d'entraînement du bec de bord d'attaque.

18. Commande par pression selon les revendications 1, 4, 5, 8, 13 et 14, **caractérisée en ce qu'**un capteur de pression (20) raccordé à l'unité de comparaison (19) par l'intermédiaire d'une liaison de données sensorielles (25) a également été raccordé dans chaque conduite collectrice d'air soutiré et / ou dans chaque liaison d'air soutiré en dérivation, en sus de la liaison d'air soutiré (16) et / ou des différentes liaisons de départ d'air soutiré (22, 23, 24), la liaison de données sensorielles (25) ayant été affûtée via un appareil de mesure de la pression (26).

19. Commande par pression selon les revendications 1, 4 et 18, **caractérisée en ce qu'**une liaison de données supplémentaire a été raccordée entre l'unité de comparaison (19) et un enregistreur de données de vol et / ou un écran d'affichage, ce dernier représentant visuellement les informations d'état correspondantes enregistrées au moins par l'enregistreur de données de vol.

20. Commande par pression selon les revendications 1, 2, 5, 8 et 12, **caractérisée en ce que** le dispositif de réglage des contours du bec de bord d'attaque (12) a été équipé en sus d'une unité d'évaluation électronique, qui, lorsque la valve marche-arrêt est fermée, contrôle l'étanchéité du corps de refoulement (4) correspondant, à l'aide du capteur de pression (20) et qui, en cas de problème, apparaît sur l'écran d'affichage du cockpit ou est affichée par un système de maintenance.

21. Commande par pression selon la revendication 20, **caractérisée en ce que**, si le corps de refoulement (4) a été alimenté avec une pression d'air définie et si la valve marche-arrêt est fermée, l'unité d'évaluation contrôle la densité du corps de refoulement (4) à laquelle la pression injectée de manière définitive à l'intérieur du corps reste constante ou la perméabilité entraînant une chute de pression à l'intérieur du corps, l'unité d'évaluation déterminant la pression à l'intérieur du corps, en comparant la pression définitivement injectée à l'intérieur du corps avec la chute de pression à l'intérieur du corps, convertissant, en cas d'écarts constatés, le résultat de la comparaison en un signal adéquat et transmettant ce signal à l'écran d'affichage du cockpit ou au système de maintenance, pour qu'il s'affiche.
